# EUROPÄISCHE PATENTSCHRIFT

(11) **EP 2 533 901 B1**
(45) Veröffentlichungstag und Bekanntmachung des Hinweises auf die Patenterteilung: **20.12.2017**
(21) Anmeldenummer: 11706192.9
(22) Anmeldetag: 08.02.2011
(51) Int. Cl.: B01J 35/04, B01J 37/02, B05D 7/22

(54) **BESCHICHTUNGSVERFAHREN UND -VORRICHTUNG**
COATING METHOD AND DEVICE
DISPOSITIF ET PROCÉDÉ DE REVÊTEMENT

(30) Priorität: 09.02.2010 DE 102010007499
(43) Veröffentlichungstag der Anmeldung: 19.12.2012
(60) Teilanmeldung: 16183967.5
(73) Patentinhaber: Umicore AG & Co. KG, 63457 Hanau-Wolfgang (DE)
(72) Erfinder: MERGNER, Bernd, 79618 Rheinfelden (DE); MASSON, Stéphane, F-68128 Village- neuf (FR)
(86) Internationale Anmeldenummer: PCT/EP2011/051826
(87) Internationale Veröffentlichungsnummer: WO 2011/098450

(56) Entgegenhaltungen:
- EP-A1- 1 273 344
- DE-A1-102005 024 124

## Beschreibung

Bei der Beschichtung von keramischen oder metallischen Wabenkörpern / Filtern, im folgenden Substrat genannt, mit flüssigen Beschichtungsmedien treten verschiedene Probleme auf.

Eine Möglichkeit der Beschichtung der Substrate ist, diesen mit den Öffnungen einer Seite mit dem vorgelegten Beschichtungsmedium zu kontaktieren und durch Anlegen eines Unterdrucks an der gegenüberliegenden Seite des Substrats das flüssige Beschichtungsmedium durch die Kanäle des Substrats hindurchzusaugen. Wenn nur eine Beschichtung der Kanäle auf einem Teil Ihrer Länge durchgeführt werden soll ist nachteilig, dass durch das zwangsläufig entstehende Strömungsprofil unterschiedliche Kanäle bis zu einer unterschiedlichen Länge beschichtet werden. Siehe hierzu als nächster Stand der Technik EP1273344. Wird das Beschichtungsmedium durch Druck gegen die Schwerkraft in die Kanäle gepresst, so muss hierbei (meist mit einem Sensor) überprüft werden, wann die Flüssigkeit bei einer vollständigen Beschichtung der Kanäle an der Oberseite austritt. Bei einer Beschichtung auf einem Teil der Länge der Kanäle wird die Höhe der Flüssigkeitssäule des Beschichtungsmediums im Inneren der Kanäle durch Sensoren bestimmt. Dieses Verfahren funktioniert jedoch nicht, wenn das Substrat aus leitenden oder halbleitenden Materialien, wie Metallen oder Siliziumkarbid, besteht.

Ein weiterer Nachteil liegt darin, dass die Beschichtungsmedien meist keramische Partikel enthalten, welche abrasiv wirken und bei Pumpen zum Transport des Beschichtungsmediums (z.B. Kolbenpumpen) einen hohen Verschleiß bewirken.

Die Aufgabe der vorliegenden Erfindung bestand darin, eine Anordnung zur Beschichtung von Substraten bereit zu stellen, welche die obigen Nachteile des Standes der Technik nicht aufweist.

Diese Aufgabe wird gelöst durch eine Anordnung zur Beschichtung von Substraten mit flüssigen Beschichtungsmedien (113, 213), welche einen mit einer Flüssigkeit (103, 203) gefüllten Zylinder (102, 202) mit einem Kolben (101, 201) aufweist, wobei der mit einer Flüssigkeit gefüllte Zylinder (102, 202) mit einem Behälter (112, 212) kommuniziert, in dessen Inneren ein Verdrängungskörper (111, 211) so angeordnet ist, dass der Verdrängungskörper (111, 211) bei Bewegung des Kolbens (101, 201) durch die Flüssigkeit (103, 203) proportional bewegt wird, und der Behälter (112, 212) mit der Beschichtungsvorrichtung (122, 222) für das Substrat (121, 221) kommuniziert, wobei der Verdrängungskörper (111, 211) auf das flüssige Beschichtungsmedium (113, 213) einwirkt, so dass eine proportionale Veränderung des Füllstandes des flüssigen Beschichtungsmediums (113, 213) in der Beschichtungsvorrichtung (122, 222) bewirkt wird.

### Kurze Beschreibung der Erfindung

1. Anordnung zur Beschichtung von Substraten zur Herstellung von Abgasreinigungskatalysatoren, insbesondere für Kraftfahrzeuge, welche zylindrische Tragkörper sind und je zwei Stirnflächen (301), eine Mantelfläche (302) und eine axiale Länge L aufweisen und von der ersten Stirnfläche zur zweiten Stirnfläche von einer Vielzahl von Kanälen (310) durchzogen sind, mit flüssigen Beschichtungsmedien, welche einen mit einer Flüssigkeit gefüllten Zylinder mit einem Kolben aufweist, wobei der mit einer Flüssigkeit gefüllte Zylinder mit einem Behälter kommuniziert, in dessen Inneren ein Verdrängungskörper so angeordnet ist, dass der Verdrängungskörper bei Bewegung des Kolbens durch die Flüssigkeit proportional bewegt wird, und der Behälter mit der Beschichtungsvorrichtung für das Substrat kommuniziert, wobei der Verdrängungskörper auf das flüssige Beschichtungsmedium einwirkt, so dass eine proportionale Veränderung des Füllstandes des flüssigen Beschichtungsmediums in der Beschichtungsvorrichtung bewirkt wird.
2. Anordnung nach Punkt 1, wobei der Kolben durch einen elektrischen Aktuator bewegt wird.
3. Anordnung nach Punkt 1 oder 2, wobei sich die Flüssigkeit im Inneren des Verdrängungskörpers und das flüssige Beschichtungsmedium außerhalb befindet und die geschlossenen Außenseiten des Verdrängungskörpers auf das Beschichtungsmedium einwirken.
4. Anordnung nach Punkt 1 oder 2, wobei sich die Flüssigkeit außerhalb des Verdrängungskörpers und das flüssige Beschichtungsmedium innerhalb befindet und die geschlossenen Innenseiten des Verdrängungskörpers auf das Beschichtungsmedium einwirken.
5. Anordnung nach einem oder mehreren der Punkte 1 bis 3, wobei die Beschichtungsvorrichtung mit Sensoren ausgestattet ist, welche auf den Füllstand des flüssigen Beschichtungsmediums reagieren und mit einer Steuereinheit verbunden sind, welche die Bewegung des Kolbens kontrolliert und das von den Sensoren übermittelte Signal zur Kontrolle der Bewegung des Kolbens verarbeitet, so dass ein reproduzierbarer Füllstand in der Beschichtungsvorrichtung unabhängig von der vorhandenen Menge des flüssigen Mediums sicher gestellt wird.
6. Anordnung nach einem oder mehreren der Punkte 1 bis 5, welche einen Sensor zur Überwachung der Position des Verdrängungskörpers aufweist.
7. Anordnung nach einem oder mehreren der Punkte 1 bis 6, welche einen Sensor zur Überwachung des Flüssigkeitsspiegels des flüssigen Beschichtungsmediums innerhalb des Substrates aufweist.
8. Verfahren zur Beschichtung von Substraten mit den Schritten
   - Bereitstellen des Substrates;
   - Bereitstellen einer Anordnung nach einem der Punkte 1 bis 7;
   - Anordnen des Substrates auf der Beschichtungsvorrichtung;
   - Auslösen der Bewegung des Kolbens, so dass die vom Kolben verdrängte Flüssigkeit den Verdrängungskörper proportional zur Menge des verdrängten Flüssigkeitsvolumens bewegt wird;
   - Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bewirkt wird;
   - Eindringen des Beschichtungsmediums in die Kanäle des Substrates bis zur gewünschten Füllhöhe bzw. beschichteten Länge der Kanäle proportional zum verdrängten Volumen des Beschichtungsmediums;
   - Entfernen des Beschichtungsmediums aus den Kanälen des Substrates, wobei sich die Beschichtung in den Kanälen ausbildet.
9. Verfahren zur Beschichtung von Substraten nach Punkt 8 mit den Schritten
   - Bereitstellen des Substrates;
   - Bereitstellen einer Anordnung gemäß einem der Punkte 1 bis 7;
   - Anordnen des Substrates auf der Beschichtungsvorrichtung;
   - Auslösen der Bewegung des Kolbens, so dass die vom Kolben verdrängte Flüssigkeit den Verdrängungskörper proportional zur Menge des verdrängten Flüssigkeitsvolumens bewegt;
   - Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem ersten Füllstand des Beschichtungsmediums bewirkt wird;
   - Feststellen des Erreichens des ersten Füllstands des Beschichtungsmediums;
   - Erneutes Auslösen oder fortgesetzte Bewegung des Kolbens, so dass die vom Kolben verdrängte Flüssigkeit den Verdrängungskörper proportional zur Menge des verdrängten Flüssigkeitsvolumens bewegt;
   - Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem zweiten Füllstand des Beschichtungsmediums bewirkt wird, wodurch das Eindringen des Beschichtungsmediums in die Kanäle des Substrates bis zur gewünschten Füllhöhe bzw. beschichteten Länge der Kanäle proportional zum verdrängten Volumen des Beschichtungsmediums erfolgt;
   - Entfernen des Beschichtungsmediums aus den Kanälen des Substrates, wobei sich die Beschichtung in den Kanälen ausbildet.
10. Verfahren nach Punkt 9, wobei der zweite Füllstand des Beschichtungsmediums innerhalb des Substrates liegt.
11. Verfahren nach einem oder mehreren der Punkte 8 bis 10, wobei ein angefeuchtetes oder mit einer Säure, Lauge oder Salzlösung imprägniertes Substrat auf der Beschichtungsvorrichtung angeordnet wird.
12. Verfahren nach einem oder mehreren der Punkte 8 bis 11, wobei das Entfernen des Beschichtungsmediums durch Anlegen eines Unterdrucks an der unteren Stirnfläche des Substrats bewirkt wird.

### Detaillierte Beschreibung der Erfindung

Der Kolben (101, 201) wird vorteilhaft durch einen elektrischen Aktuator (100, 200) bewegt. Hierzu kann beispielsweise ein mit einem Zahnrad versehener Elektromotor verwendet werden, welcher einen mit einer Zahnstange versehenen Kolben bewegt.

Das Substrat (121, 221) ist im Allgemeinen ein Hohlsubstrat, welches aus Metallen oder Keramiken besteht und mindestens einen Innenkanal (110, 210, 310) aufweist, üblicherweise eine Vielzahl von Innenkanälen. Die Substrate sind im Allgemeinen im Wesentlichen zylindrische Tragkörper, welche je eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen sind. Solche Tragkörper werden häufig auch als Wabenkörper bezeichnet. Insbesondere kann es sich bei den Substraten um Durchfluß-Wabenkörper handeln, welche eine hohe Zelldichte (Anzahl der Innenkanäle pro Querschnittsfläche) von etwa 10 cm⁻² bis 250 cm⁻² aufweisen können, aber auch Wandflußfilter können verwendet werden. Das Substrat kann beispielsweise aus Cordierit, Mullit, Aluminiumtitanat, Siliziumkarbid oder Metallen wie Stahl bzw. Edelstahl bestehen. Das Substrat ist vorteilhaft ein monolithischer, zylindrisch geformter Katalysatortragkörper und wird von einer Vielzahl von Strömungskanälen für die Abgase von Verbrennungskraftmaschinen durchzogen, die parallel zur Zylinderachse liegen. Solche monolithischen Katalysatortragkörper werden im großen Maßstab für die Herstellung von Autoabgaskatalysatoren verwendet. Die Querschnittsform der Katalysatortragkörper hängt von den Einbauerfordernissen am Kraftfahrzeug ab. Weit verbreitet sind Katalysatorkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Katalysatorkörper angeordnet. Je nach Anwendungsfall variiert die Kanalbeziehungsweise Zelldichte der Strömungskanäle meist zwischen 10 und 250 cm⁻². Für die Abgasreinigung von Personenkraftwagen werden heute noch oft Katalysatortragkörper mit Zelldichten von etwa 62 cm⁻² eingesetzt. Das Substrat ist auf der Beschichtungsvorrichtung vorteilhaft flüssigkeitsdicht angeordnet, was durch mindestens eine Dichtung bewirkt werden kann. Die Dichtung kann hohl sein und beim Aufsetzen auf oder Einsetzen in die Beschichtungsvorrichtung mit Gas oder Flüssigkeit gefüllt werden und dicht abschließen. Die Dichtigkeit der Verbindung kann durch einen Druck- oder Flußsensor kontrolliert werden.

Der Verdrängungskörper (111, 211) ist ein Hohlkörper, welcher sich durch entsprechende Druckeinwirkung ausdehnt und wieder zusammenzieht und aus einem beliebigen elastischen Material hergestellt sein kann wie Gummi, Kunststoff oder Metall, wobei das Material gegenüber der Flüssigkeit (103, 203) und dem flüssigen Medium (113, 213) inert sein muß.

Die Flüssigkeit muß keine besonderen Anforderungen erfüllen, sollte jedoch nicht korrosiv oder abrasiv wirken und ihre Eigenschaften unter den Einsatzbedingungen nicht verändern. Geeignet sind beispielsweise Hydrauliköl oder Wasser.

Das flüssige Beschichtungsmedium (113, 213) ist beispielsweise eine Suspension oder Dispersion zur Beschichtung von Abgasfiltern für Kraftfahrzeuge ("Washcoat"), welche katalytisch aktive Komponenten oder deren Precursor sowie anorganische Oxide wie Aluminiumoxid, Titandioxid, Zirconoxid oder deren Kombinationen enthält, wobei die Oxide mit z.B. Silizium oder Lanthan dotiert sein können. Als katalytisch aktive Komponenten können Oxide von Vanadium, Chrom, Mangan, Eisen, Kobalt, Kupfer, Zink, Nickel oder Seltenerdmetalle wie Lanthan, Cer, Praseodym, Neodym, Promethioum, Samarium, Europium, Gadolinium, Terbium, Dysprosium, Holmium, Erbium, Thulium Ytterbium oder deren Kombinationen eingesetzt werden. Als katalytisch aktive Komponenten können außerdem Edelmetalle wie Platin, Palladium, Gold, Rhodium, Iridium, Osmium, Ruthenium sowie deren Kombinationen eingesetzt werden. Diese Metalle können auch als Legierungen miteinander oder anderen Metallen oder als Oxide vorliegen. Im flüssigen Beschichtungsmedium können die Metalle auch als Precursor vorliegen, wie Nitrate, Sulfite oder Organyle der genannten Edelmetalle sowie deren Mischungen, insbesondere können Palladiumnitrat, Palladiumsulfit, Platinnitrat, Platinsulfit oder Pt(NH₃)₄(NO₃)₂ eingesetzt werden. Durch Kalzinierung bei etwa 400°C bis etwa 700°C kann dann die katalytisch aktive Komponente aus dem Precursor erhalten werden. Zur Beschichtung eines Substrates zur Herstellung von Autoabgaskatalysatoren kann zunächst mit einer Suspension oder Dispersion eines anorganischen Oxids beschichtet werden und in einem folgenden Beschichtungsschritt mit einer Suspension oder Dispersion, welche einen oder mehrere katalytisch aktive Komponenten enthält. Das flüssige Beschichtungsmedium kann jedoch auch beide dieser Komponenten enthalten. Das flüssige Beschichtungsmedium weist oft einen Feststoffgehalt zwischen 35 und 52 % sowie Viskositäten zwischen 15 und 300 cps auf.

Die Geometrie des Verdrängungskörpers (111, 211) kann an die Innenform des Behälters (112, 212) angepasst sein, was aber nicht unbedingt erforderlich ist. So kann einerseits ein Faltenbalg mit viereckiger oder kreisförmiger Grundfläche in einem Behälter mit entsprechender Innenform eingesetzt werden und damit gleichsam als hydraulisch expandierbarer Stempel auf das flüssige Beschichtungsmedium (113, 213) einwirken. Ebenso kann der Verdrängungskörper (111, 211) auch als sphärische Gummiblase ausgebildet sein, welche ohne besondere Anpassung an die Innengeometrie des Behälters auf das flüssige Beschichtungsmedium (113, 213) einwirkt. Der Verdrängungskörper (111, 211) kann den Behälter im Wesentlichen vollständig ausfüllen, dies muß jedoch nicht unbedingt der Fall sein, sofern der Verdrängungskörper (111, 211) ausreichend groß ist um die Beschichtungsvorrichtung (122, 222) und das zu beschichtende Volumen des Substrats (121, 221) mit flüssigem Beschichtungsmedium zu füllen. Der Behälter (112, 212) muß -abgesehen von den Öffnungen, mit welchen er mit dem Zylinder (102, 202) und der Beschichtungsvorrichtung (122, 222) kommuniziert- gegenüber der Umgebung abgedichtet oder verschließbar sein. Vorteilhaft weist der Behälter (112, 212) allerdings Zuführungen für flüssiges Beschichtungsmedium (113) oder Flüssigkeit (203) auf und kann vorteilhaft zu Wartungs- und Reinigungszwecken geöffnet oder demontiert werden.

Dabei kann der Zylinder (102, 202) auf unterschiedliche Weise mit dem Behälter (112, 212) kommunizieren. Einerseits kann sich die Flüssigkeit im Inneren des Verdrängungskörpers (111) und das flüssige Beschichtungsmedium (113) außerhalb des Verdrängungskörpers (111) im Behälter (112) befinden, so dass die geschlossenen Außenseiten des Verdrängungskörpers (111) auf das flüssige Beschichtungsmedium (113) einwirken. Dabei wird im Behälter ein Druck erzeugt, durch den das flüssige Medium (113) durch eine Öffnung aus dem Behälter über eine Leitung (114) in die Beschichtungsvorrichtung (122) gefördert wird.

In einer weiteren Ausführungsform der Erfindung kann sich die Flüssigkeit (203) außerhalb des Verdrängungskörpers (211) im Behälter (212) und das flüssige Beschichtungsmedium (213) innerhalb des Verdrängungskörpers (211) befinden, so dass die geschlossenen Innenseiten des Verdrängungskörpers (211) auf das flüssige Beschichtungsmedium (213) einwirken und das flüssige Beschichtungsmedium (213) durch eine Öffnung aus dem Behälter (212) über eine Leitung (214) in die Beschichtungsvorrichtung (222) gefördert wird.

In einer weiteren Ausgestaltung der Erfindung ist die Beschichtungsvorrichtung (122, 222) mit Sensoren (123, 223) ausgestattet, welche auf den Füllstand des flüssige Beschichtungsmedium (113, 213) reagieren.

Geeignete Sensoren können ein Brechungsindexsensor sein, welcher auf die Änderung des Brechungsindex beim Ansteigen des Flüssigkeitsspiegels reagiert, ein Leitfähigkeitssensor oder einfach eine Lichtschranke.

Diese Sensoren sind vorteilhaft mit einer Steuereinheit (115, 215) verbunden, welche die Bewegung des Kolbens (101, 201) kontrolliert und das von den Sensoren (123, 223) übermittelte Signal zur Kontrolle der Bewegung des Kolbens verarbeitet, so dass ein reproduzierbarer Füllstand (130, 230) des flüssigen Beschichtungsmediums (113, 213) in der Beschichtungsvorrichtung (122, 222) unabhängig von der Menge des flüssigen Beschichtungsmediums (113, 213) sichergestellt werden kann. Werden mehrere Substrate (121, 221) hintereinander beschichtet, so verringert sich sukzessive mit jedem Beschichtungsvorgang die Menge des flüssigen Beschichtungsmediums (113, 213) in der Anordnung, so dass bei gleichen Verfahrensparametern der Flüssigkeitsstand in der Beschichtungsvorrichtung (122, 222) sinkt. Durch den Einsatz der Sensoren (123, 223) kann dieser Effekt ausgeglichen und ein gleich bleibender Flüssigkeitsstand auch bei einem Nachfüllen von flüssigem Beschichtungsmedium sichergestellt werden. Durch Verwendung einer geeigneten Steuereinheit (125,225), welche das Signal der Sensoren verarbeitet und den Kolben (101, 201) bzw. den zur Betätigung des Kolbens eingesetzten vorzugsweise elektrischen Aktuator (100, 200) steuert, kann der festgelegte Füllstand (130, 230) des flüssigen Beschichtungsmediums (113, 213) in der Beschichtungsvorrichtung (122, 222) automatisch eingestellt werden.

Die Anordnung gemäß der Erfindung kann außerdem einen Sensor zur Überwachung der Position des Verdrängungskörpers aufweisen. Hierzu kann beispielsweise eine Lichtschranke (124, 224), ein Ultraschallsensor oder ein mechanischer Sensor (z.B. Kipphebelschalter) verwendet werden der die Ausdehnung bzw. Position des Verdrängungskörpers überwacht. Falls der Verdrängungskörper eine Leckage aufweist kann dies hierdurch festgestellt werden, da der Verdrängungskörper in diesem Fall nicht mehr vollständig in seine Ausgangsstellung zurückkehrt oder sich vollständig ausdehnt. Ein derartiger Sensor zeigt dann ein solches Ereignis an.

Die Anordnung gemäß der Erfindung kann außerdem einen Sensor zur Überwachung des Flüssigkeitsspiegels (123, 232) des flüssigen Beschichtungsmediums innerhalb des Substrates (121, 221) aufweisen. Auf diese Weise kann die Zufuhr von flüssigem Beschichtungsmedium in das Substrat abgebrochen werden, wenn das Substrat bis zur gewünschten Substratlänge beschichtet wurde. Ein solcher Sensor ist jedoch nicht stets erforderlich, da es ja ein Vorteil der Anordnung gemäß der Erfindung ist, dass diese Überwachung nicht mehr durchgeführt werden muß, wenn das Innenvolumen des Substrates bekannt ist. Allerdings kann es vorteilhaft sein, wenn ein derartiger Sensor zur Kalibrierung der Anordnung vorhanden ist.

Die fertigen, zur Herstellung von Abgasfiltern für Kraftfahrzeuge geeigneten Substrate weisen eine besonders gleichmäßige Beschichtung auf welche dadurch gekennzeichnet ist, dass die beschichteten Längen der unterschiedlichen Kanäle um nicht mehr als 5 mm, insbesondere 3 mm voneinander abweichen, was für mindestens 95% aller Kanäle eines Substrates zutrifft, vorteilhaft mindestens 99% aller Kanäle eines Substrates, insbesondere bei 100% aller Kanäle. Durch Defekte kann es vorkommen, dass bei einzelnen Kanälen eines Substrates die Strömungs- und Druckverhältnisse stark von den übrigen Kanälen abweichen, was dazu führt, dass das flüssige Beschichtungsmedium erheblich schwerer oder leichter eindringt und unter den Beschichtungsbedingungen entweder auf einer geringeren oder größeren Länge der einzelnen Kanäle beschichtet wird. In diesen Fällen kann die gewünschte gleichmäßige Beschichtungslänge nur bei einem Teil der Kanäle erreicht werden, jedoch im Allgemeinen bei mehr als 95% aller Kanäle.

Die Erfindung betrifft auch ein Verfahren zur Beschichtung von Substraten, welches mit der Anordnung durchgeführt wird.

Dieses Verfahren zur Beschichtung von Substraten weist die Schritte auf:
- Bereitstellen des Substrates;
- Bereitstellen einer Anordnung gemäß der Erfindung;
- Anordnen des Substrates auf der Beschichtungsvorrichtung;
- Auslösen der Bewegung des Kolbens, so dass die vom Kolben verdrängte Flüssigkeit den Verdrängungskörper proportional zur Menge des verdrängten Flüssigkeitsvolumens bewegt;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bewirkt wird;
- Eindringen des Beschichtungsmediums in die Kanäle des Substrates bis zur gewünschten Füllhöhe bzw. beschichteten Länge der Kanäle proportional zum verdrängten Volumen des Beschichtungsmediums;
- Entfernen des Beschichtungsmediums aus den Kanälen des Substrates, wobei sich die Beschichtung in den Kanälen ausbildet.

Das Entfernen des Beschichtungsmediums aus den Kanälen des Substrates wird durch Anlegen eines Druckgefälles bewirkt, wodurch überschüssige Beschichtungssuspension nach dem Unterbrechen der Zufuhr an Beschichtungsmedium zum Substrat entfernt wird.

Gemäß der vorliegenden Erfindung kann die Entfernung durch Zurückziehen des Kolbens (101, 201) bewirkt werden, da hierdurch der Füllstand des Beschichtungsmediums in der Beschichtungsvorrichtung (122, 222) und dem Substrat (121, 221) abgesenkt wird, wodurch das Druckgefälle erzeugt und das überschüssige Beschichtungsmedium aus den Kanälen des Substrates entfernt wird. Die Entfernung des Beschichtungsmediums kann aber auch nach den bekannten Methoden des Standes der Technik bewirkt werden, was im Folgenden beschrieben ist.

Beispielsweise kann hierzu an den unteren Stirnflächen ein Unterdruck angelegt werden, indem zum Beispiel ein Ventil zu einem evakuierten Unterdruckbehälter geöffnet wird. Gleichzeitig kann von den oberen Stirnflächen des Substrats Luft oder ein anderes, dem beschichteten Substrat und der Beschichtungssuspension gegenüber inertes Gas wie Stickstoff den oberen Stirnflächen drucklos zugeführt werden. Da der Druck im Unterdruckbehälter sinkt, verringert sich damit auch die Strömungsgeschwindigkeit des Gases in den Kanälen der Substrate. Ein solche Vorgehen ist beispielsweise in der EP-A1-941763, Seite 4, Zeile 56 bis Seite 5, Zeile 36 beschrieben, worauf Bezug genommen wird.

Es kann jedoch auch umgekehrt verfahren und das Vakuum an den oberen Stirnflächen und die Gaszufuhr an den unteren Stirnflächen der Substrate angelegt werden. Ebenso kann diese Zufuhr auch ein- oder mehrfach gewechselt bzw. umgekehrt werden, was gemäß US-B-7094728 eine gleichmäßigere Beschichtung der Kanäle in den Substraten bewirkt.

Statt Anlegen eines Unterdrucks ("Aus- bzw. Freisaugen" der Substrate) kann auch ein Überdruck angelegt werden ("Ausblasen" der Substrate). Hierzu wird Luft oder ein anderes, den beschichteten Substraten und der Beschichtungssuspension gegenüber inertes Gas wie Stickstoff der oberen oder unteren Stirnfläche unter Druck zugeführt. Diejenigen Stirnflächen, welche den mit Gasdruck beaufschlagten Stirnflächen gegenüberliegen, müssen dabei einen ausreichenden Abfluß des Gases gewährleisten. Dazu kann ein Unterdruck (Vakuum) angelegt werden, was aber nicht unbedingt erforderlich ist. Es sollte jedoch von den gegenüberliegenden Seiten nicht ebenfalls ein Gas- oder Flüssigkeitsdruck angelegt sein, um eine Strömungsgeschwindigkeit des Gases zu gewährleistet, die ausreicht, um überschüssige Beschichtungssuspension aus den Kanälen der Substrate zu entfernen. Ähnlich dem oben kurz skizzierten Verfahren gemäß US-B-7094728 kann auch in diesem Fall der Überdruck abwechselnd von den oberen und unteren Stirnflächen zugeführt werden.

Nach Entfernen der überschüssigen Beschichtungssuspension werden die Substrate gegebenenfalls getrocknet sowie einer Wärmebehandlung unterzogen (kalziniert).

Vor der Wärmebehandlung können die Substrate getrocknet werden. Diese Maßnahme ist optional, da das Substrat bei der folgenden Wärmebehandlung ohnehin getrocknet wird.

Hierzu können die Kanäle des Substrats nach der Entnahme aus der Beschichtungsvorrichtung beispielsweise von unten entgegen der Schwerkraft mit vorgewärmter Luft mit Temperaturen zwischen 20 und 150°C und Geschwindigkeiten von mehr als 4, bevorzugt 7 - 10 m/s, für die Dauer von 5 bis 20 s durchströmt wird. Durch diese Art der Vortrocknung vor der Wärmebehandlung (Kalzinieren) kann ein häufig bei sehr hohen Beladungen zu beobachtendes Zulaufen der Strömungskanäle bzw. eine Verengung der Kanäle am unteren Ende der Substrate vermieden werden. Diese zusätzliche Maßnahme ermöglicht es, das Substrat mit einer höheren Beschichtungsmenge als üblich zu beladen, ohne dass sich die Strömungskanäle während des Trocknungs- und Kalzinierungsvorgangs verschließen oder verengen. Die Konzentration der Beschichtungsdispersion auf dem Substrat kann also durch diese Maßnahme erhöht werden.

Die Wärmebehandlung wird im Allgemeinen bei Temperaturen von etwa 150°C bis etwa 800°C, insbesondere bei etwa 200°C bis 700°C, vorteilhaft bei etwa 250°C bis etwa 600°C durchgeführt. Die Zeit der Wärmebehandlung liegt bei etwa 1 bis 5, vorteilhaft 2 bis 3 Stunden und einer Aufheizrate von etwa 10°C/min bis etwa 50°C/min, insbesondere etwa 20°C/min bis etwa 40°C/min, vorteilhaft etwa 35°C/min bis etwa 45°C/min, wobei sich die Aufheizraten auf die Temperatur des Ofens beziehen. Die Aufheizraten können bei batchweiser Wärmebehandlung durch eine entsprechende, gesteuerte Aufheizung des Ofens oder in einem kontinuierlichen Prozess durch die Steuerung der Vorschubgeschwindigkeit der Substrate durch einen Tunnelofen bewirkt werden, welcher mit einem festgelegten Temperaturprofil betrieben wird.

In einer Ausgestaltung des Verfahrens der Erfindung wird das Substrat vor dem Anordnen auf der Beschichtungsvorrichtung angefeuchtet. Die Substrate weisen im trockenen Zustand ein erhebliches Saugvermögen für Flüssigkeiten auf. Insbesondere bei der Beschichtung von hochzelligen Substraten mit Zelldichten von 120 cm⁻² und darüber kann dies schon während des Füllens zu einer Verfestigung des Beschichtungsmediums und einer Verstopfung der Strömungskanäle führen. Es ist daher vorteilhaft, die Substrate vor dem Beschichten anzufeuchten. Hierbei kann es sich auch um eine Vorimprägnierung mit Säuren, Basen oder Salzlösungen handeln. Die Vorimprägnierung erleichtert die Ausbildung der Beschichtung auf den Kanalwänden nach der Sol-Gel-Methode. Durch den Kontakt der Beschichtungsdispersion mit den vorimprägnierten Kanalwänden wird der pH-Wert der Dispersion verschoben. Hierdurch wird die Dispersion in ein Gel überführt.

In einer weiteren Ausgestaltung des Verfahrens der Erfindung wirkt der Verdrängungskörper auf das Beschichtungsmedium derart ein, dass ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bewirkt wird, bis ein erster Füllstand des Beschichtungsmediums in der Beschichtungsvorrichtung erreicht ist. Dieser erste Füllstand wird festgelegt, damit vor dem Beginn jedes Beschichtungsvorgangs eines Substrats stets der gleiche Flüssigkeitsstand in der Beschichtungsvorrichtung vorliegt, so dass auch bei sich verringernder Menge an flüssigem Beschichtungsmedium eine reproduzierbare beschichtete Länge der Kanäle erreicht werden kann. Das Erreichen des ersten Füllstandes kann durch ein von den Sensoren (123, 223) ausgelöstes Signal festgestellt werden.

Nach dem Erreichen des ersten Füllstandes des Beschichtungsmediums wird das zur Beschichtung des Substrates (d.H. das zur Beschichtung der Innenseiten der Kanäle des Substrates bis zur gewünschten beschichteten Länge der Kanäle) benötigte Volumen an Beschichtungsmedium in die Kanäle eingebracht. Hierzu wirkt der Verdrängungskörper auf das Beschichtungsmedium derart ein, dass ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bewirkt, also das Eindringen des Beschichtungsmediums in die Kanäle des Substrates bis zur gewünschten Füllhöhe bzw. beschichteten Länge der Kanäle proportional zum verdrängten Volumen, bis ein zweiter Füllstand des Beschichtungsmediums in der Beschichtungsvorrichtung erreicht ist. Das Erreichen des zweiten Füllstandes kann durch einen Sensor festgestellt werden. Während der erste Füllstand des Beschichtungsmediums sich innerhalb der Beschichtungsvorrichtung (122, 222) befindet, liegt der zweite Füllstand des Beschichtungsmediums entweder im Inneren des Substrates (121, 221), oder aber zumindest auf gleicher Ebene, vorzugsweise jedoch oberhalb der oberen Stirnfläche des Substrates (121, 221). Wenn der zweite Füllstand im Inneren des Substrates liegt, so wird eine beschichtete Länge des Substrates erreicht, welche kleiner als dessen axiale Länge L ist. Liegt der zweite Füllstand des Beschichtungsmediums auf gleicher Ebene, vorzugsweise jedoch oberhalb der oberen Stirnfläche des Substrates (121,221), so wird die Innenseite der Kanäle des Substrates auf der gesamten axialen Länge L beschichtet.

Vorteilhaft wird die Kontrolle des zweiten Füllstandes durch einen Sensor jedoch nur zur Kalibrierung, also der Einstellung der Parameter zur Steuerung der Anordnung durchgeführt. Sind diese Parameter einmal bekannt, so können gleichartige Substrate mit den gleichen Parametern reproduzierbar beschichtet werden, ohne den zweiten Füllstand bei jedem Beschichtungsvorgang mit einem Sensor zu überwachen.

Anschließend erfolgt das Entfernen des (überschüssigen) Beschichtungsmediums aus den Kanälen des Substrates, wobei sich die Beschichtung in den Kanälen ausbildet. Die erhaltenen Substrate werden dann gegebenenfalls getrocknet und einer Wärmebehandlung unterzogen, wie oben beschrieben.

Die Erfindung betrifft daher auch ein Verfahren zur Beschichtung von Substraten mit den Schritten:
- Bereitstellen des Substrates;
- Bereitstellen einer Anordnung gemäß der Erfindung;
- Anordnen des Substrates auf der Beschichtungsvorrichtung;
- Auslösen der Bewegung des Kolbens, so dass die vom Kolben verdrängte Flüssigkeit den Verdrängungskörper proportional zur Menge des verdrängten Flüssigkeitsvolumens bewegt;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem ersten Füllstand des Beschichtungsmediums bewirkt wird;
- Feststellen des Erreichens des ersten Füllstands des Beschichtungsmediums;
- Erneutes Auslösen oder fortgesetzte Bewegung des Kolbens, so dass die vom Kolben verdrängte Flüssigkeit den Verdrängungskörper proportional zur Menge des verdrängten Flüssigkeitsvolumens bewegt;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem zweiten Füllstand des Beschichtungsmediums bewirkt wird, wodurch das Eindringen des Beschichtungsmediums in die Kanäle des Substrates bis zur gewünschten Füllhöhe bzw. beschichteten Länge der Kanäle proportional zum verdrängten Volumen des Beschichtungsmediums erfolgt;
- Entfernen des Beschichtungsmediums aus den Kanälen des Substrates, wobei sich die Beschichtung in den Kanälen ausbildet.

Die vorliegende Erfindung erlaubt also reproduzierbare beschichtete Längen der Kanäle der Substrate mit geringer Abweichung der beschichteten Längen innerhalb der Substrate und stellt eine Anordnung zur Beschichtung bereit, welche auch bei stark abrasiv wirkenden Beschichtungsmedien einen geringen Verschleiß zeigt.

Die fertigen, zur Herstellung von Abgasfiltern für Kraftfahrzeuge geeigneten Substrate (d.H. beschichteten und wärmebehandelten bzw. kalzinierten Substrate) weisen eine besonders gleichmäßige Beschichtung auf welche dadurch gekennzeichnet ist, dass die beschichteten Längen der unterschiedlichen Kanäle zwischen den Kanälen um nicht mehr als 5 mm, insbesondere 3 mm voneinander abweichen, was für mindestens 95% aller Kanäle eines Substrates zutrifft, vorteilhaft mindestens 99% aller Kanäle eines Substrates, insbesondere bei 100% aller Kanäle. Durch Defekte kann es vorkommen, dass bei einzelnen Kanälen eines Substrates die Strömungs- und Druckverhältnisse stark von den übrigen Kanälen abweichen, was dazu führt, dass das flüssige Beschichtungsmedium erheblich schwerer oder leichter eindringt und unter den Beschichtungsbedingungen entweder auf einer geringeren oder größeren Länge der einzelnen Kanäle beschichtet wird. In diesen Fällen kann die gewünschte gleichmäßige Beschichtungslänge nur bei einem Teil der Kanäle erreicht werden, jedoch im Allgemeinen bei mehr als 95% aller Kanäle. Die beschichtete Länge der Kanäle ist hierbei kleiner als die axiale Länge L. Die einheitliche Beschichtungslänge besitzt den Vorteil, dass auf diese Weise zwei Beschichtungen von den einander gegenüberliegenden Stirnseiten des jeweiligen Substrates eingebracht werden können. Sind diese Beschichtungen unterschiedlich und müssen voneinander getrennt sein (z.B. weil die Beschichtungskomponenten miteinander auf unerwünschte Weise reagieren oder sich gegenseitig in ihrer Wirkung beeinträchtigen), so muß zwischen den beiden Beschichtungen ein Abstand eingehalten und zuverlässig sichergestellt werden. Dabei ist es von Vorteil, wenn die Beschichtungslänge möglichst genau und zuverlässig eingestellt werden kann, da so nur eine geringe Länge des Substrates für den Abstand zwischen den Beschichtungen aufgewendet werden muß, welcher unbeschichtet und somit funktionslos bleibt. Hierdurch kann eine verbesserte Abgasreinigung bewirkt oder die Beladung des Substrates mit Beschichtung reduziert werden.

Besonders vorteilhaft kann mit der Vorrichtung und dem Verfahren der Erfindung also ein beschichtetes Substrat zur Herstellung von Abgasfiltern für Kraftfahrzeuge erhalten werden, bei welchem die Kanäle innen mit mindestens einer ersten katalytisch aktiven Beschichtung und einer zweiten katalytisch aktiven Beschichtung versehen sind, die mit der ersten katalytisch aktiven Beschichtung und der zweiten katalytisch aktiven Beschichtung beschichteten Längen der Kanäle jeweils kleiner als die axiale Länge L des Substrates ist und bei mindestens 95% der Kanäle eines Substrates die mit der ersten katalytisch aktiven Beschichtung und der zweiten katalytisch aktiven Beschichtung jeweils beschichteten Längen der Kanäle nicht mehr als 5 mm, vorzugsweise 3 mm, voneinander abweichen, und wobei der Abstand zwischen beiden Beschichtungen bei mindestens 95% der Kanäle eines Substrates maximal 5 mm, vorteilhaft maximal 3 mm beträgt, insbesondere maximal 1 mm.

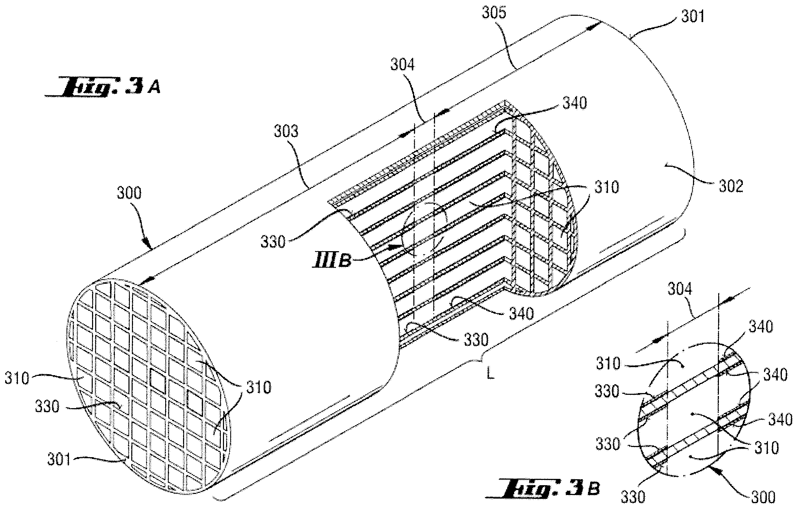

In Figuren 3A und 3B ist ein derartiges beschichtetes Substrat (300) dargestellt. Das Substrat weist zwei Stirnflächen (301), eine Mantelfläche (302) sowie eine Länge (L) auf und ist von einer Vielzahl von Kanälen (310) zwischen den Stirnflächen durchzogen. Dabei sind die Kanäle auf einer ersten Teillänge (303) mit einer ersten Beschichtung (330) versehen und auf einer weiteren Teillänge (305) mit einer zweiten Beschichtung (340), in Fig. 3A mit verdickten Linien dargestellt, welche zwei Zonen bilden, die jeweils mit einer ersten und einer zweiten Beschichtung versehen sind. Der zwischen beiden Zonen (303, 305) liegende Abstand (304) wird vorzugsweise minimiert, wozu eine möglichst einheitliche Beschichtungslänge in beiden Zonen (303, 305) erforderlich ist, um eine Überlappung zu vermeiden. Dieser beschichtungsfreie Abstand (304) beträgt gemäß dieser Erfindung maximal 5 mm, vorteilhaft maximal 3 mm, insbesondere maximal 1 mm. In dieser Figur 3A ist ein Substrat (300) mit kreisförmigen Stirnflächen dargestellt. Die Stirnflächen können natürlich auch rechteckig, quadratisch, oval, dreieckig, sechseckig, oder sonstige polygonale Formen aufweisen, was eine entsprechende unterschiedliche räumliche Form des Substrates bewirkt, wie z.B. prismen- oder quaderförmig.

Die Teillängen, die mit der ersten (330) und der zweiten (340) Beschichtung versehen sind, können gleich oder verschieden sein.

Die Art der ersten und der zweiten Beschichtung sind vorteilhaft unterschiedlich. In einer Ausgestaltung der Erfindung ist mindestens eine der Beschichtungen ein Oxidationskatalysator oder ein SCR-Katalysator. In einer besonders vorteilhaften Ausgestaltung der Erfindung ist die erste Beschichtung (330) ein SCR-Katalysator und die zweite Beschichtung (340) ein Oxidationskatalysator.

Der Oxidationskatalysator enthält vorteilhaft ein Edelmetall der Gruppe VIII des Periodensystems der Elemente wie Platin, Palladium, Ruthenium, Rhodium, Gold, Iridium oder deren Mischungen, vorteilhaft auf einem porösen festen Träger, meist ein poröses anorganisches Oxid wie Aluminiumoxid oder Siliziumdioxid. Besonders vorteilhaft ist Platin auf einem porösen Aluminiumoxid als Träger. Diese Beschichtung auf dem beschichteten Substrat weist im Allgemeinen eine Menge von 0,1 bis 10 g/ft³ Platin auf.

In einer spezifischen Ausgestaltung der Erfindung enthält der SCR-Katalysator ein Oxid ausgewählt aus der Gruppe Titandioxid, Vanadiumpentoxid, Wolframtrioxid, Ceroxid, Zirkonoxid oder deren Mischungen.

In einer weiteren spezifischen Ausgestaltung der Erfindung enthält der SCR-Katalysator Titandioxid als Matrix, bis zu 10 Gew.-% Vanadiumpentoxid und bis zu 20 Gew.-% Wolframtrioxid.

In einer weiteren spezifischen Ausgestaltung der Erfindung enthält die erste Beschichtung einen SCR-Katalysator enthaltend Vanadiumpentoxid und Aluminiumoxid und die zweite Beschichtung enthält einen Oxidationskatalysator, der Platin, Gold, Palladium und Aluminiumoxid enthält. Die zweite Beschichtung weist in diesem Fall vorzugsweise eine Menge von 0,1 bis 10 g/ft³ an Platin, Gold oder deren Kombinationen auf

In einer weiteren spezifischen Ausgestaltung der Erfindung enthält die erste Beschichtung einen SCR-Katalysator enthaltend Titandioxid, Vanadiumpentoxid und Wolframtrioxid und die zweite Beschichtung enthält einen Oxidationskatalysator, der Platin und Aluminiumoxid enthält. Die zweite Beschichtung weist in diesem Fall vorzugsweise eine Menge von 0,1 bis 10 g/ft³ an Platin auf.

In einer weiteren spezifischen Ausgestaltung der Erfindung enthält die erste Beschichtung einen SCR-Katalysator enthaltend eine Zusammensetzung eines Zeolithen, insbesondere einen mit Eisen oder Kupfer ausgetauschten Zeolithen, und die zweite Beschichtung enthält einen Oxidationskatalysator, der Platin und Aluminiumoxid enthält. Die zweite Beschichtung weist in diesem Fall vorzugsweise eine Menge von 0,1 bis 10 g/ft³ an Platin auf.

In einer weiteren spezifischen Ausgestaltung der Erfindung enthält die erste Beschichtung einen SCR-Katalysator enthaltend einen mit Eisen ausgetauschten Beta-Zeolithen mit einer Ammoniak-Speicherkapazität von mindestens 20 Milliliter Ammoniak pro Gramm Katalysatormaterial und die zweite Beschichtung enthält einen Oxidationskatalysator, der Platin und Aluminiumoxid enthält. Die zweite Beschichtung weist in diesem Fall vorzugsweise eine Menge von 0,1 bis 10 g/ft³ an Platin auf.

In einer weiteren spezifischen Ausgestaltung der Erfindung enthält die erste Beschichtung einen SCR-Katalysator enthaltend eine Zusammensetzung eines Zeolithen, insbesondere einen mit Eisen oder Kupfer ausgetauschten Zeolithen., und die zweite Beschichtung enthält einen Oxidationskatalysator, der Palladium und/oder Rhodium, sowie Aluminiumoxid enthält. Die zweite Beschichtung weist in diesem Fall vorzugsweise eine Menge von 0,1 bis 10 g/ft³ an Palladium, Rhodium oder deren Kombinationen auf.

Die beschichteten, zur Herstellung von Abgasfiltern für Kraftfahrzeuge geeigneten Substrate weisen Porositäten von mehr als 40 % auf, im Allgemeinen von 40% bis 75%, insbesondere von 45% bis 60%. Die mittleren Porengrößen liegen bei mindesten 7 µm, beispielsweise bei 7 µm bis 34 µm, bevorzugt bei mehr als 10 µm, insbesondere bei 10 µm bis 20 µm oder bei 11 µm bis 19 µm. Insbesondere vorteilhaft sind fertige, zur Herstellung von Abgasfiltern für Kraftfahrzeuge geeigneten Substrate zeigen mittlere Porengrößen von 11 bis 33 µm und Porositäten von 40 % bis 60 %.

Die Zelldichten der Substrate betragen meist bis zu 700 oder mehr pro inch² (square inch), wobei deutlich niedrigere Zelldichten gebräuchlich sind, wie etwa 7 bis 600, insbesondere 100 bis 400 Zellen pro inch² (400 Zellen pro inch² entsprechen etwa 62 Zellen pro cm²), wobei die Formen der Zellen rechteckig, quadratisch, kreisförmig, oval, dreieckig, sechseckig, oder sonstige polygonale Formen aufweisen können. Die Zelldichte ist ein Maß für die Anzahl der Kanäle pro Flächeneinheit der Draufsicht, welche die Substrate parallel zur Längsachse durchziehen. Die Wanddicken, also die Dicke der Wände, welche die Kanäle voneinander trennen, liegen bei 0,002 und 0,1 inch (ca. 0,005 cm bis ca. 0,25 cm), vorzugsweise bei 0,002 bis 0,015 inch (ca. 0,005 cm bis 0,038 cm). Vorteilhafte Substrate liegen bei einer Wanddicke von etwa 0,01 inch bis 0,02 inch (etwa 0,0254 cm bis 0,058 cm), vorzugsweise mit einer Porosität von 40 % bis 60 % und einer mittleren Porengröße von 10 µm bis 20 µm.

### Detaillierte Beschreibung der Zeichnungen:

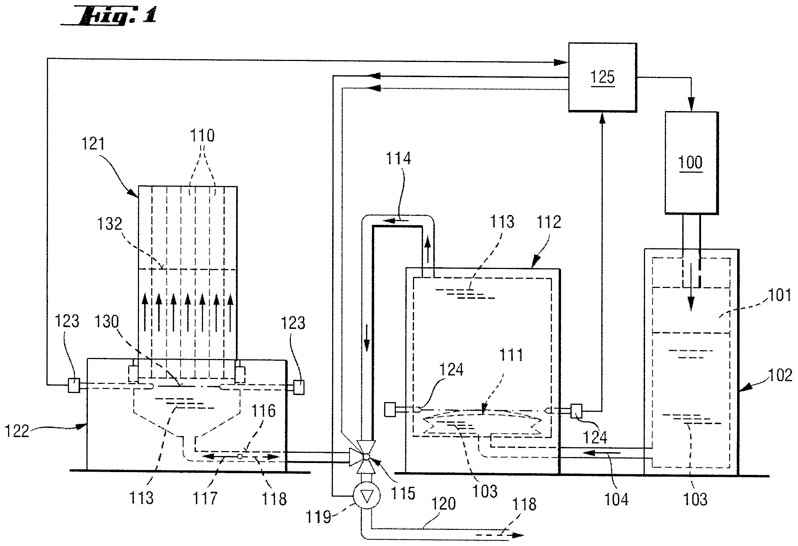

Figur 1 zeigt eine Anordnung der Erfindung zur Beschichtung von Kanälen (110) in einem Substrat (121), welche einen, von einem Aktuator (100) betätigten, Kolben (101) in einem Zylinder (102) aufweist, der mit Flüssigkeit (103) gefüllt ist und durch eine Verbindung (104) von Zylinder (102) mit dem Verdrängungskörper (111) die Betätigung des Verdrängungskörpers (111) in dem Behälter (112) gestattet, welcher mit flüssigem Beschichtungsmedium (113) gefüllt ist und zwei Leitungsabschnitte (114, 116) mit einem dazwischen geschaltetem Mehrwegeventil (115) zwischen Behälter (112) und der Beschichtungsvorrichtung (122) aufweist, wobei die Beschichtungsvorrichtung (122) mit dem Substrat (121) und mit Sensoren (123) zur Ermittlung des ersten Füllstandes (130) versehen ist. Mit weiteren Sensoren (124) wird das Verdrängungsvolumen von Beschichtungsmedium (113) bzw. der Zustand des Verdrängungskörpers (111) im Behälter (112) kontrolliert.

Die von den Sensoren (123, 124) ermittelten Werte werden einer Steuereinheit (125) übermittelt, welche ihrerseits den Aktuator (100) und damit den Kolben (101) steuert.

Das Mehrwegeventil (115) schaltet zum Einen in Befüllungsflussrichtung (117) die Befüllung der Beschichtungsvorrichtung (122) bis zum ersten Füllstand (130) mit Beschichtungsmedium (113) und zum Anderen, nach Erreichen des zweiten Füllstandes (132) im Substrat (121), in Rückflussrichtung (118) die Verbindung zur Entleerungspumpe (119) und zur Verbindungsleitung (120) zu einem Vorratsbehälter für überschüssiges Beschichtungsmedium (113) und zur dessen Bereithaltung für die Weiterverwendung.

Alle erforderlichen Steuerbefehle hierzu werden vorzugsweise ebenfalls von der zentralen Steuereinheit (125) erteilt.

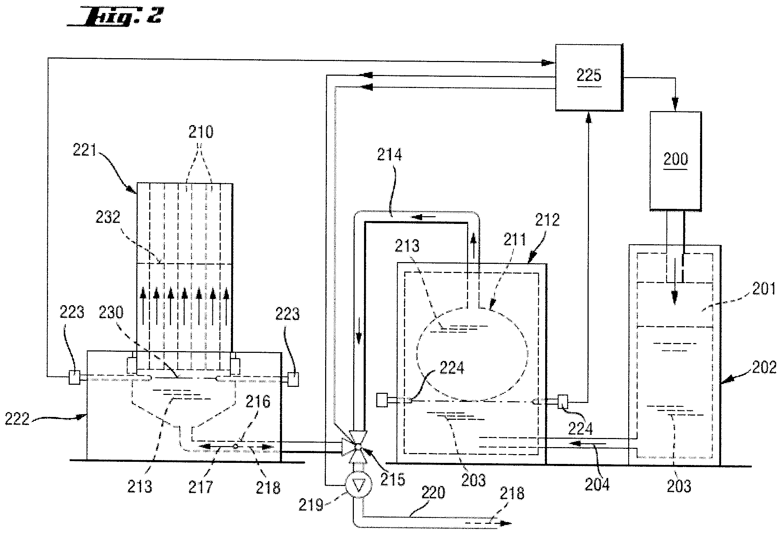

Figur 2 zeigt eine Anordnung der Erfindung zur Beschichtung von Kanälen (210) in einem Substrat (221), welche einen , von einem Aktuator (200) betätigten, Kolben (201) in einem Zylinder (202) aufweist, der mit Flüssigkeit (203) gefüllt ist, und durch eine Verbindung (204) von Zylinder (202) mit dem Behälter (212) kommuniziert, in welchem sich der Verdrängungskörper (211) befindet, der flüssiges Beschichtungsmedium (213) enthält und welcher über zwei Leitungsabschnitte (214,216) mit einem dazwischen geschalteten Mehrwegeventil (215) mit der Beschichtungsvorrichtung (222) verbunden ist, welche mit einem Substrat (221) und Sensoren (223) zur Ermittlung des ersten Füllstandes (230) des Beschichtungsmediums (213) versehen ist.

Mit den weiteren Sensoren (224) am Behälter (212) wird das Verdrängungsvolumen von Beschichtungsmedium bzw. der Zustand des Verdrängungskörpers (211) im Behälter (212) kontrolliert. Die von den Sensoren (223, 224) ermittelten Werte werden einer Steuereinheit (225) übermittelt, welche ihrerseits den Aktuator (200) und damit den Kolben (201) steuert.

Das Mehrwegeventil (215) schaltet zum Einen in Befüllungsflussrichtung (217) die Befüllung der Beschichtungsvorrichtung (222) bis zum ersten Füllstand (230) mit Beschichtungsmedium (213) und zum Anderen, nach Erreichen des zweiten Füllstandes (232) im Substrat (221), in Rückflussrichtung (218) die Verbindung zur Entleerungspumpe (219) und zur Verbindungsleitung (220) zu einem Vorratsbehälter für überschüssiges Beschichtungsmedium (213) und zur dessen Bereithaltung für die Weiterverwendung. Alle erforderlichen Steuerbefehle hierzu werden vorzugsweise ebenfalls von der zentralen Steuereinheit (225) erteilt.

Figuren 3A und 3B zeigen in Perspektive ein Substrat (300), welches in seinem mittleren Teil einen Schnittaufbruch in drei Ebenen aufweist, um den Einblick in die erfindungsgemäße Beschichtungsstruktur zu vermitteln.

Das in zwei Teillängen- Zonen (303,305) beschichtete Substrat (300), weist zwei Stirnflächen (301), eine Mantelfläche (302) sowie eine Länge (L) auf und ist von einer Vielzahl von Kanälen (310) zwischen den beiden Stirnflächen (301) durchzogen.

Auf einer ersten Teillängen- Zone (303) ist in den Kanälen (310) eine erste Beschichtung (330) aufgebracht, während eine weitere Teillängen- Zone (305) mit einer zweiten Beschichtung (340) versehen ist.

Zwischen den beiden Teillängen- Zonen (303) und (305) resp. zwischen den beiden Beschichtungen (330) und (340) befindet sich eine beschichtungsfreie Zone (304), wie das insbesondere dies Fig. 3B vergrössert zeigt.

### Kurze Beschreibung der Zeichnungen

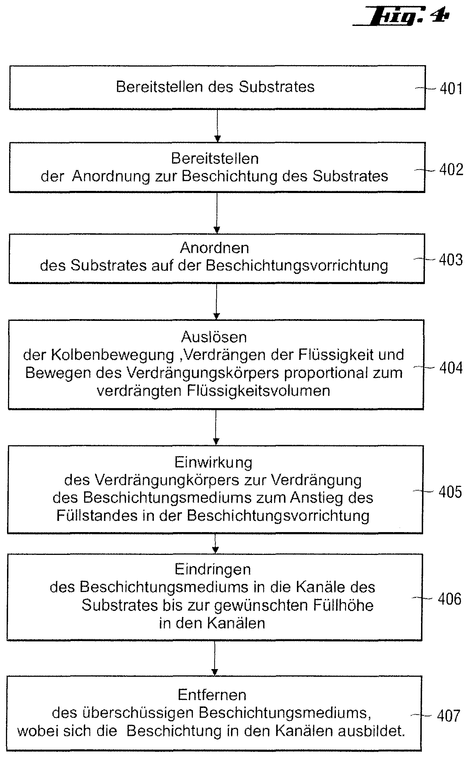

Fig.1:
   100 Aktuator
   101 Kolben
   102 Zylinder
   103 Flüssigkeit
   104 Verbindung
   110 Kanäle - im Substrat 121
   111 Verdrängungskörper
   112 Behälter
   113 Beschichtungsmedium
   114 Leitungsabschnitt
   115 Mehrwegeventil
   116 Leitungsabschnitt
   117 Befüllungs-Flußrichtung
   118 Rück-Flussrichtung, zur Entfernung von Beschichtungsmedium 113
   119 Entleerungspumpe
   120 Verbindungsleitung zum Reservoir des Beschichtungsmediums
   121 Substrat
   122 Beschichtungsvorrichtung
   123 Sensor zur Erfassung des Füllstandes 130
   124 Sensor zur Überwachung der Position des Verdrängungskörpers 111
   125 Steuereinheit
   130 Erster Füllstand - von 113 in der Beschichtungsvorrichtung 122
   132 zweiter Füllstand - von 113 im Substrat 121
Fig.2:
   200 Aktuator
   201 Kolben
   202 Zylinder
   203 Flüssigkeit
   204 Verbindung
   210 Kanäle - im Substrat 221
   211 Verdrängungskörper
   212 Behälter
   213 Beschichtungsmedium
   214 Leitungsabschnitt
   215 Mehrwegeventil
   216 Leitungsabschnitt
   217 Befüllungs-Richtung
   218 Absaugflussrichtung von 213
   219 Entleerungs- und Absaugpumpe
   220 Verbindungsleitung zum Reservoir für überschüssiges Beschichtungsmedium 213
   221 Substrat
   222 Beschichtungsvorrichtung
   223 Sensor zur Erfassung des Füllstandes 230
   224 Sensor zur Überwachung der Position des Verdrängungskörpers
   225 Steuereinheit
   230 Erster Füllstand - in der Beschichtungsvorrichtung 222
   232 zweiter Füllstand - im Substrat 221
Fig. 3:
   300 Substrat
   301 Stirnfläche
   302 Mantelfläche
   303 Erste Teillängen - Zone
   304 Abstand - zwischen den beiden Teillängen 303 und 305
   305 Zweite Teillängen - Zone
   310 Kanäle - im Substrat 300
   330 Erste Beschichtung - in den Kanälen 310
   340 Zweite Beschichtung - in den Kanälen 310
   L Länge - gesamt- des Substrats 300
Fig. 4: 401 bis 407 bezeichnen die sieben Verfahrensschritte gemäß Anspruch 5

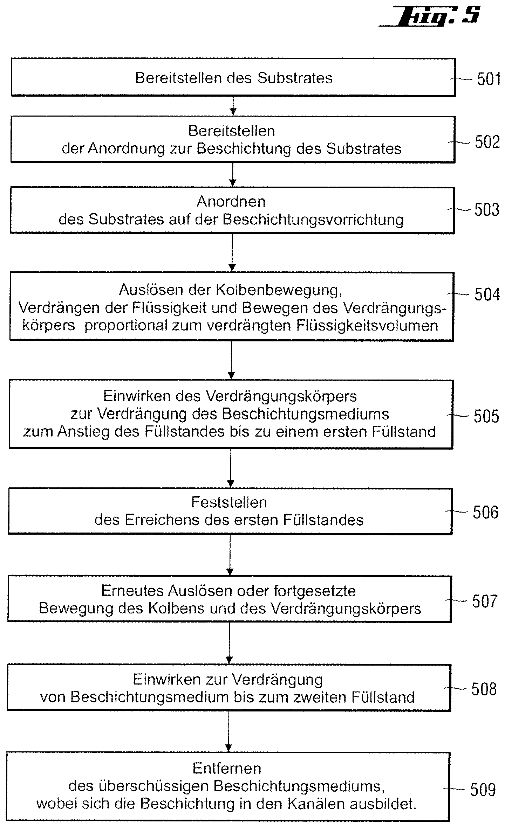

Fig. 5: 501 bis 509 bezeichnen die neun Verfahrensschritte gemäß Anspruch 6

### Beispiel 1

Durchflußwabenkörper mit einer Länge von 101,6 mm und ovalem Querschnitt mit einer Nebenachse von 86 mm und einer Hauptachse von 131 mm und einer Zelldichte von 62 cm⁻² aus Cordierit werden mit einer Suspension von auf Aluminiumoxid geträgertem Platin (erhalten nach Beispiel 1 der EP 957064) in Wasser mit einem Feststoffgehalt von 35 Gew.-% als Beschichtungsmedium beschichtet. Es wird hierzu eine Anordnung nach Figur 2 verwendet. Die Beschichtungshöhe beträgt 45,8 mm. Die beschichteten Substrate werden nach dem Beschichten mit einem Luftstrom von 100°C getrocknet und bei 500°C calciniert. Bei jedem tausendsten beschichteten Tragkörper wird nach dem Beschichten mittels Röntgen die beschichtete Länge bestimmt und mit einer digitalen Bildauswertung die beschichteten Längen der Kanäle bestimmt und die Differenz der jeweiligen maximalen und minimalen Längen gebildet. Die Differenz ist stets kleiner als 3,0 mm. Es werden 200 beschichtete Tragkörper untersucht. Die Beschichtungsvorrichtung nach Figur 2 wird weiter betrieben. Zur Durchführung von 325.000 Beschichtungsvorgängen ist keine Unterbrechung zur Wartung oder Reparatur erforderlich.

### Beispiel 2

Es wurde verfahren wie in Beispiel 1, jedoch wurde eine Anordnung nach Figur 1 verwendet. Die Differenzen der maximalen und minimalen Längen waren stets kleiner als 2 mm. Es werden 170 beschichtete Tragkörper untersucht. Zur Durchführung von 225.000 Beschichtungsvorgängen ist keine Unterbrechung zur Wartung oder Reparatur erforderlich.

## Patentansprüche

1. Anordnung zur Beschichtung von Substraten zur Herstellung von Abgasreinigungskatalysatoren, insbesondere für Kraftfahrzeuge, welche zylindrische Tragkörper sind und je zwei Stirnflächen (301), eine Mantelfläche (302) und eine axiale Länge L aufweisen und von der ersten Stirnfläche zur zweiten Stirnfläche von einer Vielzahl von Kanälen (310) durchzogen sind, mit flüssigen Beschichtungsmedien, welche einen mit einer Flüssigkeit gefüllten Zylinder mit einem Kolben aufweist, wobei der mit einer Flüssigkeit gefüllte Zylinder mit einem Behälter kommuniziert, in dessen Inneren ein Verdrängungskörper so angeordnet ist, dass der Verdrängungskörper bei Bewegung des Kolbens durch die Flüssigkeit proportional bewegt wird, und der Behälter mit der Beschichtungsvorrichtung für das Substrat kommuniziert, wobei der Verdrängungskörper auf das flüssige Beschichtungsmedium einwirkt, so dass eine proportionale Veränderung des Füllstandes des flüssigen Beschichtungsmediums in der Beschichtungsvorrichtung bewirkt wird.

2. Anordnung nach Anspruch 1, wobei der Kolben durch einen elektrischen Aktuator bewegt wird.

3. Anordnung nach einem oder mehreren der Ansprüche 1 bis 2, wobei die Beschichtungsvorrichtung mit Sensoren ausgestattet ist, welche auf den Füllstand des flüssigen Beschichtungsmediums reagieren und mit einer Steuereinheit verbunden sind, welche die Bewegung des Kolbens kontrolliert und das von den Sensoren übermittelte Signal zur Kontrolle der Bewegung des Kolbens verarbeitet, so dass ein reproduzierbarer Füllstand in der Beschichtungsvorrichtung unabhängig von der vorhandenen Menge des flüssigen Mediums sicher gestellt wird.

4. Anordnung nach einem oder mehreren der Ansprüche 1 bis 3, welche einen Sensor zur Überwachung der Position des Verdrängungskörpers aufweist.

5. Verfahren zur Beschichtung von Substraten und von der ersten Stirnfläche zur zweiten Stirnfläche von einer Vielzahl von Kanälen durchzogen sind, mit den Schritten
- Bereitstellen des Substrates;
- Bereitstellen einer Anordnung nach einem der Ansprüche 1 bis 4;
- Anordnen des Substrates auf der Beschichtungsvorrichtung;
- Auslösen der Bewegung des Kolbens, so dass die vom Kolben verdrängte Flüssigkeit den Verdrängungskörper proportional zur Menge des verdrängten Flüssigkeitsvolumens bewegt wird;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bewirkt wird;
- Eindringen des Beschichtungsmediums in die Kanäle des Substrates bis zur gewünschten Füllhöhe bzw. beschichteten Länge der Kanäle proportional zum verdrängten Volumen des Beschichtungsmediums;
- Entfernen des Beschichtungsmediums aus den Kanälen des Substrates, wobei sich die Beschichtung in den Kanälen ausbildet.

6. Verfahren zur Beschichtung von Substraten nach Anspruch 5 mit den Schritten
- Bereitstellen des Substrates;
- Bereitstellen einer Anordnung gemäß einem der Ansprüche 1 bis 4;
- Anordnen des Substrates auf der Beschichtungsvorrichtung;
- Auslösen der Bewegung des Kolbens, so dass die vom Kolben verdrängte Flüssigkeit den Verdrängungskörper proportional zur Menge des verdrängten Flüssigkeitsvolumens bewegt;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem ersten Füllstand des Beschichtungsmediums bewirkt wird;
- Feststellen des Erreichens des ersten Füllstands des Beschichtungsmediums;
- Erneutes Auslösen oder fortgesetzte Bewegung des Kolbens, so dass die vom Kolben verdrängte Flüssigkeit den Verdrängungskörper proportional zur Menge des verdrängten Flüssigkeitsvolumens bewegt;
- Einwirken des Verdrängungskörpers auf das Beschichtungsmedium, wobei ein der Bewegung des Verdrängungskörpers proportionales Volumen des Beschichtungsmediums verdrängt und ein entsprechender Anstieg des Füllstandes des Beschichtungsmediums in der Beschichtungsvorrichtung bis zu einem zweiten Füllstand des Beschichtungsmediums bewirkt wird, wodurch das Eindringen des Beschichtungsmediums in die Kanäle des Substrates bis zur gewünschten Füllhöhe bzw. beschichteten Länge der Kanäle proportional zum verdrängten Volumen des Beschichtungsmediums erfolgt;
- Entfernen des Beschichtungsmediums aus den Kanälen des Substrates, wobei sich die Beschichtung in den Kanälen ausbildet.

## Claims

1. Arrangement for coating substrates with liquid coating medium for the production of exhaust gas purification catalysts - especially, for motor vehicles - the substrates being cylindrical support bodies each having two end faces (301), a lateral surface (302) and an axial length L, and being traversed by a plurality of channels (310) from the first end face to the second end face, having a chamber filled with a liquid and having a piston, wherein the liquid-filled chamber communicates with a tank, in the interior of which a displacement body is arranged in such a way that, when the piston is moved, the displacement body is moved proportionally by the liquid, and the tank communicates with a coating device for the substrate, wherein the displacement body acts on the liquid coating medium in such a way that a proportional change in the fill-level of the liquid coating medium in the coating device is effected.

2. Arrangement according to claim 1, wherein the piston is moved by an electrical actuator.

3. Arrangement according to one or more of claims 1 through 2, wherein the coating device is fitted with sensors which respond to the fill-level of liquid coating medium and are connected to a control unit which controls the movement of the piston and processes a signal transmitted by the sensors for monitoring the movement of the piston such that a reproducible fill-level of the liquid coating medium in the coating device is assured, irrespective of the available quantity of the liquid coating medium in the tank.

4. Arrangement according to one or more of claims 1 through 3, further comprising a sensor for monitoring the position of the displacement body.

5. Method for coating substrates traversed from the first end face to a second end face by a multiplicity of channels, comprising the steps of:
- provision of the substrate;
- provision of an arrangement according to one of claims 1 through 4;
- arrangement of the substrate on the coating device;
- initiation of the movement of the piston such that the liquid displaced by the piston moves the displacement body proportionally to the volume of liquid displaced;
- action by the displacement body on the coating medium, wherein a volume of coating medium proportional to the movement of the displacement body is displaced, and a corresponding rise in the level of coating medium in the coating device is effected;
- penetration of the coating medium into the channels of the substrate up to a desired filling level or coated length of the channels proportionally to the displaced volume of coating medium;
- removal of the coating medium from the channels of the substrate, with a coating forming in the channels.

6. Method for coating substrates according to claim 5, comprising the steps of:
- provision of the substrate;
- provision of an arrangement according to one of claims 1 through 4;
- arrangement of the substrate on the coating device;
- initiation of the movement of the piston such that the liquid displaced by the piston moves the displacement body proportionally to the volume of liquid displaced;
- action by the displacement body on the coating medium, wherein a volume of coating medium proportional to the movement of the displacement body is displaced, and a corresponding rise in the level of coating medium in the coating device up to a first level of coating medium is effected;
- detection of the attainment of the first level of coating medium;
- renewed initiation or continued movement of the piston, such that the liquid displaced by the piston moves the displacement body proportionally to the volume of liquid displaced;
- action by the displacement body on the coating medium, wherein a volume of coating medium proportional to the movement of the displacement body is displaced, and a corresponding rise in the level of coating medium in the coating device up to a second level of coating medium is effected, whereby the coating medium penetrates into the channels of the substrate up to a desired filling level or coated length of the channels proportionally to the displaced volume of coating medium;
- removal of the coating medium from the channels of the substrate, with a coating forming in the channels.

## Revendications

1. Ensemble pour le revêtement de substrats, pour la fabrication de catalyseurs d'épuration de gaz d'échappement, notamment pour des véhicules automobiles, qui sont des corps de support cylindriques et présentent chacun deux surfaces avant (301), une surface d'enveloppe (302) et une longueur axiale L et qui sont traversés, de la première surface avant vers la deuxième surface avant, par une pluralité de canaux (310), par des agents de revêtement liquides, qui présente un cylindre rempli d'un liquide pourvu d'un piston, le cylindre rempli d'un liquide communiquant avec un récipient, à l'intérieur duquel un corps de refoulement est disposé de sorte que le corps de refoulement est déplacé proportionnellement lors du déplacement du piston par le biais du liquide et que le récipient communique avec le dispositif de revêtement pour le substrat, le corps de refoulement agissant sur l'agent de revêtement liquide de sorte qu'une modification proportionnelle du niveau de remplissage de l'agent de revêtement liquide est provoquée dans le dispositif de revêtement.

2. Ensemble selon la revendication 1, le piston étant déplacé par un actionneur électrique.

3. Ensemble selon une ou plusieurs des revendications 1 à 2, le dispositif de revêtement étant équipé de capteurs, lesquels réagissent au niveau de remplissage de l'agent de revêtement liquide et sont reliés à une unité de commande, qui commande le déplacement du piston et qui traite le signal transmis par les capteurs pour la commande du déplacement du piston, de sorte qu'un niveau de remplissage reproductible est assuré dans le dispositif de revêtement, indépendamment de la quantité disponible de l'agent liquide.

4. Ensemble selon une ou plusieurs des revendications 1 à 3, qui présente un capteur pour la surveillance de la position du corps de refoulement.

5. Procédé de revêtement de substrats qui sont traversés de la première surface avant à la deuxième surface avant par une pluralité de canaux, comprenant les étapes
- de mise à disposition du substrat ;
- de mise à disposition d'un ensemble selon une des revendications 1 à 4 ;
- de disposition du substrat sur le dispositif de revêtement ;
- de déclenchement du déplacement du piston, de sorte que le liquide refoulé par le piston déplace le corps de refoulement proportionnellement à la quantité du volume de liquide refoulé ;
- d'action du corps de refoulement sur l'agent de revêtement, un volume, proportionnel au déplacement du corps de refoulement, de l'agent de revêtement étant refoulé et une augmentation correspondante du niveau de remplissage de l'agent de revêtement étant provoquée dans le dispositif de revêtement ;
- de pénétration de l'agent de revêtement dans les canaux du substrat jusqu'à la hauteur de remplissage souhaitée ou la longueur revêtue souhaitée des canaux, proportionnellement au volume refoulé de l'agent de revêtement ;
- d'élimination de l'agent de revêtement hors des canaux du substrat, le revêtement se formant dans les canaux.

6. Procédé de revêtement de substrats selon la revendication 5 comprenant les étapes
- de mise à disposition du substrat ;
- de mise à disposition d'un ensemble selon une des revendications 1 à 4 ;
- de placement du substrat sur le dispositif de revêtement ;
- de déclenchement du déplacement du piston, de sorte que le liquide refoulé par le piston déplace le corps de refoulement proportionnellement à la quantité du volume de liquide refoulé ;
- d'action du corps de refoulement sur l'agent de revêtement, un volume, proportionnel au déplacement du corps de refoulement, de l'agent de revêtement étant refoulé et une augmentation correspondante du niveau de remplissage de l'agent de revêtement étant provoquée dans le dispositif de revêtement jusqu'à un premier niveau de remplissage de l'agent de revêtement ;
- de détermination que le premier niveau de remplissage de l'agent de revêtement est atteint ;
- de nouveau déclenchement du déplacement ou de déplacement supplémentaire du piston, de sorte que le liquide refoulé par le piston déplace le corps de refoulement proportionnellement à la quantité du volume de liquide refoulé ;
- d'action du corps de refoulement sur l'agent de revêtement, un volume, proportionnel au déplacement du corps de refoulement, de l'agent de revêtement étant refoulé et une augmentation correspondante du niveau de remplissage de l'agent de revêtement dans le dispositif de revêtement étant provoquée jusqu'à un second niveau de remplissage de l'agent de revêtement, entraînant la pénétration de l'agent de revêtement dans les canaux du substrat jusqu'à la hauteur de remplissage souhaitée ou la longueur revêtue souhaitée des canaux, proportionnellement au volume refoulé de l'agent de revêtement ;
- d'élimination de l'agent de revêtement hors des canaux du substrat, le revêtement étant formé dans les canaux.
